# EUROPEAN PATENT APPLICATION

(11) **EP 3 703 411 A1**
(43) Date of publication of application: **02.09.2020**
(21) Application number: 17931035.4
(22) Date of filing: 30.10.2017
(51) Int. Cl.: H04W 24/02, H04W 48/16

(54) **SYSTEM INFORMATION SENDING METHOD, APPARATUS, COMPUTER DEVICE, AND STORAGE MEDIUM**

(71) Applicant: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/108333
(87) International publication number: WO 2019/084714

(57) **Abstract**

Disclosed are a system information sending method, apparatus, computer device, and storage medium; a relay node can obtain an MSI broadcast by a base station, forward said MSI to the end node served, and can obtain on-demand system information requirements of the end node and request, from the base station, the on-demand system information required by the end node, then send to a corresponding end node the on-demand system information issued by the base station; in addition, the relay node can also send to the end node the updated system information issued by the base station, thereby solving the problem of sending system information in the context of a relay.

## Description

### TECHNICAL FIELD

The present disclosure relates to a wireless network technology, and in particular, to a method and an apparatus for sending system information, a computer device, and a storage medium.

### BACKGROUND

The 5G new air interface (New Radio, NR) system has introduced a system information broadcasting mechanism, including Minimized System Information (MSI) and Other System Information (OSI). The MSI must be obtained by an end node, and the OSI may be obtained as needed. Therefore, the OSI may also be referred to as on-demand system information.

In the related art, mainly considering the case where the end node is located in the coverage of the base station, the system information may directly reach the end node by broadcasting. For the problem of sending system information in a relay scenario, there is no effective solution in the related art.

### SUMMARY

In view of this, the present disclosure provides a method and an apparatus for sending system information, a computer device, and a storage medium, which can solve the problem of sending system information in a relay scenario.

The specific technical solutions are as follows.

A method for sending system information includes:
obtaining MSI broadcast by a base station, and forwarding the MSI to a served end node, by a relay node;
obtaining an on-demand system information requirement of the end node, and requesting on-demand system information from the base station, by the relay node; and
sending, by the relay node, the on-demand system information delivered by the base station to the corresponding end node.

A method for sending system information, including:
sending, by a relay node, updated system information obtained from a base station to an end node in a connected state.

A method for sending system information includes:
broadcasting, by a base station, MSI to a relay node, so that the relay node forwards the MSI to an end node served by the relay node;
obtaining, by the base station, an on-demand system information request from the relay node, where the on-demand system information request carries an on-demand system information requirement obtained by the relay node from the end node; and
delivering, by the base station, the on-demand system information to the corresponding end node via the relay node.

A method for sending system information includes:
sending, by a base station, updated system information to an end node in a connected state via a relay node.

A method for sending system information includes:
obtaining, by an end node, MSI broadcast by a base station via a relay node;
sending, by the end node, an on-demand system information requirement to the relay node, so that the relay node requests on-demand system information from the base station; and
obtaining, by the end node, the on-demand system information delivered by the base station via the relay node.

A method for sending system information includes:
obtaining, by an end node in a connected state, updated system information delivered by the base station via a relay node.

A relay node includes: a first forwarding unit, a requesting unit, and a second forwarding unit; wherein
the first forwarding unit is configured to obtain MSI broadcast by a base station, and forward the MSI to a served end node;
the requesting unit is configured to obtain an on-demand system information requirement of the end node, and request on-demand system information from the base station; and
the second forwarding unit is configured to send the on-demand system information delivered by the base station to the corresponding end node.

A relay node includes: a third forwarding unit;
wherein the third forwarding unit is configured to send updated system information obtained from a base station to an end node in a connected state.

A base station includes: a first processing unit and a second processing unit; wherein
the first processing unit is configured to broadcast MSI to a relay node, so that the relay node forwards the MSI to an end node served by the relay node; and
the second processing unit is configured to obtain an on-demand system information request from the relay node, where the on-demand system information request carries an on-demand system information requirement obtained by the relay node from the end node; and deliver on-demand system information to the corresponding end node via the relay node.

Abase station includes: a third processing unit;
wherein the third processing unit is configured to send updated system information to an end node in a connected state via a relay node.

An end node includes: a first obtaining unit, a sending unit, and a second obtaining unit; wherein
the first obtaining unit is configured to obtain MSI broadcast by a base station via a relay node;
the sending unit is configured to send an on-demand system information requirement to the relay node, so that the relay node requests on-demand system information from the base station; and
the second obtaining unit is configured to obtain the on-demand system information delivered by the base station via the relay node.

An end node includes: a third obtaining unit;
wherein the third obtaining unit is configured to, when the end node is in a connected state, obtain updated system information delivered by the base station via a relay node.

A computer device includes: a memory, a processor, and a computer program stored on the memory and operative on the processor, where the processor, when executing the program, implements the method as described above.

A computer readable storage medium stores thereon a computer program that, when executed by a processor, implements the method as described above.

As can be seen from the above, with the solution of the present disclosure, the relay node can obtain MSI broadcast by the base station, forward the MSI to the end node served by the relay node, obtain an on-demand system information requirement of the end node, request the on-demand system information required by the end node from the base station, and then send the on-demand system information delivered by the base station to the corresponding end node. In addition, the relay node can also send updated system information delivered by the base station to the end node, thereby solving the problem of sending system information in a relay scenario.

### BRIEF DESCRIPTION OF THE DRAWINGS

Fig. 1 is a flowchart of a first embodiment of a method for sending system information according to the present disclosure.
Fig. 2 is a flowchart of a second embodiment of a method for sending system information according to the present disclosure.
Fig. 3 is a flowchart of a third embodiment of a method for sending system information according to the present disclosure.
Fig. 4 is a schematic diagram of an interaction manner among an end node, a relay node, and a gNB according to the present disclosure.
Fig. 5 is a structural schematic diagram of a first embodiment of a relay node according to the present disclosure.
Fig. 6 is a structural schematic diagram of a second embodiment of a relay node according to the present disclosure.
Fig. 7 is a structural schematic diagram of a first embodiment of a base station according to the present disclosure.
Fig. 8 is a structural schematic diagram of a second embodiment of a base station according to the present disclosure.
Fig. 9 is a structural schematic diagram of a first embodiment of an end node according to the present disclosure.
Fig. 10 is a structural schematic diagram of a second embodiment of an end node according to the present disclosure.
Fig. 11 shows a structural schematic diagram of an exemplary computer system/server 12 suitable for implementing embodiments of the present disclosure.

### DETAILED DESCRIPTION

In view of the problems existing in the related art, the present disclosure proposes a manner for sending system information suitable for use in a relay scenario, and mainly relates to interaction among a base station (gNB), a relay node, and an end node.

In order to make the technical solutions of the present disclosure more clear and apparent, the solutions of the present disclosure will be further described below with reference to the accompanying drawings and the embodiments.

Apparently, the described embodiments are a part of the embodiments of present disclosure, and not all of the embodiments. All other embodiments obtained by a person skilled in the art based on the embodiments of the present disclosure without creative efforts are within the protection scope of the present disclosure.

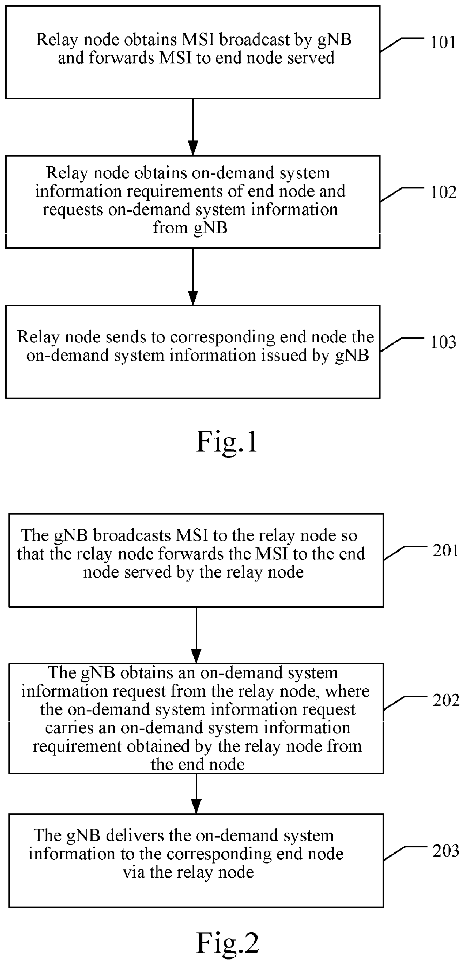

Fig. 1 is a flowchart of a method for sending system information according to a first embodiment of the present disclosure. As shown in Fig. 1, the following specific implementations are included.

In 101, a relay node obtains MSI broadcast by a gNB and forwards the MSI to an end node served by the relay node.

In the relay scenario, after the MSI broadcast by the gNB is received by the relay node, if the relay node supports a relay function, including but not limited to a synchronization source function, the relay node forwards the MSI, that is, forwards the MSI to an end node served by the relay node.

The MSI may further carry OSI scheduling information, and correspondingly, the end node obtains the OSI scheduling information.

In 102, the relay node obtains an on-demand system information requirement of the end node, and requests on-demand system information from the gNB.

For an end node in a non-connected state, after obtaining the MSI and the OSI scheduling information and the like forwarded by the relay node, it may determine whether it needs to request other required system information according to the system information that the current cell has broadcast, that is, whether it has an on-demand system information requirement. The non-connected state may include an idle state and an inactive state, and the like.

If there is an on-demand system information requirement, the end node may interact with the relay node to make the relay node know the on-demand system information requirement of the end node, and the interaction may be performed through a non-cellular or cellular link.

The relay node may gather the obtained on-demand system information requirements of individual end nodes, and collectively request from the gNB according to the gathering result.

For example, the relay node totally obtains on-demand system information requirements of two end nodes: an end node *a* and an end node *b*, where the on-demand system information required by the end node *a* is on-demand system information 1 and on-demand system information 2, and the on-demand system information required by the end node b is on-demand system information 2 and on-demand system information 3, then the relay node may request the on-demand system information 1, the on-demand system information 2, and the on-demand system information 3 from the gNB.

The manner in which the relay node requests the on-demand system information from the gNB may include:
1) the relay node requesting the on-demand system information from the gNB through random access; and
2) the relay node requesting the on-demand system information from the gNB through radio resource control (RRC) dedicated signaling.

The relay node may optionally select the above manner 1) or 2) to request the on-demand system information from the gNB.

In 103, the relay node sends the on-demand system information delivered by the gNB to the corresponding end node.

The gNB may deliver the on-demand system information required by the end node to the corresponding end node via the relay node according to the request of the relay node.

Specifically, the gNB may send the on-demand system information to the relay node through an RRC connection between the gNB and the relay node, and then the relay node sends the on-demand system information to the corresponding end node through a connection between the relay node and the end node.

Alternatively, the gNB broadcasts the on-demand system information, and then the relay node sends the on-demand system information to the corresponding end node through transparent transmission by means of RRC dedicated signaling.

The gNB may determine the delivery method of the on-demand system information according to a predetermined criterion. For example, if currently a remaining rate of physical broadcast channel (PBCH) resources is lower than a remaining rate of physical downlink shared channel (PDSCH) resources, or the on-demand system information required by the end node is only required by the end node served by one certain relay node, then the former delivery method may be employed, that is, sending the on-demand system information to the relay node through an RRC connection between the gNB and the relay node, and then sending the on-demand system information to the corresponding end node through the connection between the relay node and the end node by the relay node. For another example, if the on-demand system information required by the end node is required by the end node served by a plurality of relay nodes, or a current remaining rate of PBCH resources is greater than a predetermined threshold, then the latter delivery mode may be employed, that is, the gNB broadcasting the on-demand system information, and then the relay node transmitting the on-demand system information to the corresponding end node through transparent transmission by means of RRC dedicated signaling. The above criteria are merely illustrative and are not intended to limit the technical solutions of the present disclosure.

Correspondingly, the manner in which the relay node sends the on-demand system information delivered by the gNB to the corresponding end node may include:
1) the relay node obtaining the on-demand system information sent by the gNB through the RRC connection between the gNB and the relay node, and sending the on-demand system information to the corresponding end node through the connection between the relay node and the end node; and
2) the relay node transmitting the on-demand system information broadcast by the gNB to the corresponding end node through transparent transmission of the relay node by means of RRC dedicated signaling.

In the above embodiment, description has been made with respect to the situation when the end node is in a non-connected state. When the end node is in a connected state, the relay node may send updated system information obtained from the gNB to the end node in the connected state.

It may include the following three implementations:
1) the relay node transmitting through transparent transmission to the end node, system information which was sent by the gNB to the end node through the RRC connection between the gNB and the end node;
2) the relay node obtaining system information sent by the gNB through the RRC connection between the gNB and the relay node, and sending the system information to the end node through a connection between the relay node and the end node; and
3) the relay node relaying a paging message delivered by the gNB to the end node, and relaying the system information broadcast by the gNB to the end node, so that the end node reads a corresponding system information block from the system information according to the paging message.

For the implementation 3), an ehanced paging mechanism is needed for relaying the paging message of the gNB to the end node, and also relaying the system information to the end node, which requires that the paging occasion of the end node and the configuration of the discontinuous reception (DRX) cycle are not affected by the relay and the introduced delay.

Fig. 2 is a flowchart of a second embodiment of a method for sending system information according to the present disclosure. As shown in Fig. 2, the following specific implementations are included.

In 201, the gNB broadcasts MSI to the relay node so that the relay node forwards the MSI to the end node served by the relay node.

In the relay scenario, after the MSI broadcast by the gNB is received by the relay node, the relay node forwards the MSI, that is, forwards the MSI to the end node served by the relay node.

In 202, the gNB obtains an on-demand system information request from the relay node, where the on-demand system information request carries an on-demand system information requirement obtained by the relay node from the end node.

The relay node may gather the on-demand system information requirements of the served end nodes in the non-connected state, and collectively request from the gNB, that is, send the on-demand system information request to the gNB.

Specifically, the manner in which the gNB obtains the on-demand system information request from the relay node may include:
1) the gNB obtaining the on-demand system information request sent by the relay node through random access; and
2) the gNB obtaining the on-demand system information request sent by the relay node through RRC dedicated signaling.

Based on the obtained on-demand system information request, the gNB may know which one or more kinds of on-demand system information is requested by the relay node.

In 203, the gNB delivers the on-demand system information to the corresponding end node via the relay node.

The manner in which the gNB delivers the on-demand system information to the corresponding end node via the relay node may include:
1) the gNB delivering the on-demand system information to the relay node through an RRC connection between the gNB and the relay node, so that the relay node sends the on-demand system information to the corresponding end node through a connection between the relay node and the end node; and
2) the gNB broadcasting the on-demand system information, so that the relay node transmits the on-demand system information to the corresponding end node through transparent transmission by means of RRC dedicated signaling.

The gNB may determine the delivery method of the on-demand system information according to a predetermined criterion. For example, if currently a remaining rate of PBCH resources is lower than a remaining rate of PDSCH resources, or the on-demand system information required by the end node is only required by an end node served by one certain relay node, then the former delivery method may be employed. If the on-demand system information required by the end node is required by an end node served by a plurality of relay nodes, or a current remaining rate of PBCH resources is greater than a predetermined threshold, then the latter delivery mode may be employed. The above criteria are merely illustrative and are not intended to limit the technical solutions of the present disclosure.

In addition, the gNB may also send updated system information to the end node in a connected state via the relay node.

The specific implementations may include:
1) the gNB sending the system information to the end node through an RRC connection between the gNB and the end node, and the relay node transmitting the system information through transparent transmission;
2) the gNB sending the system information to the relay node through an RRC connection between the gNB and the relay node, so that the relay node sends the system information to the end node through a connection between the relay node and the end node; and
3) the gNB relaying a paging message to the end node via the relay node, and relaying the broadcast system information to the end node via the relay node, so that the end node reads a corresponding system information block from the system information according to the paging message.

For the implementation 3), an enhanced paging mechanism is needed for relaying the paging message of the gNB to the end node, and relaying the system information to the end node, which requires that the paging occasion of the end node and the configuration of the discontinuous reception (DRX) cycle are not affected by the relay and the delay introduced by the relay.

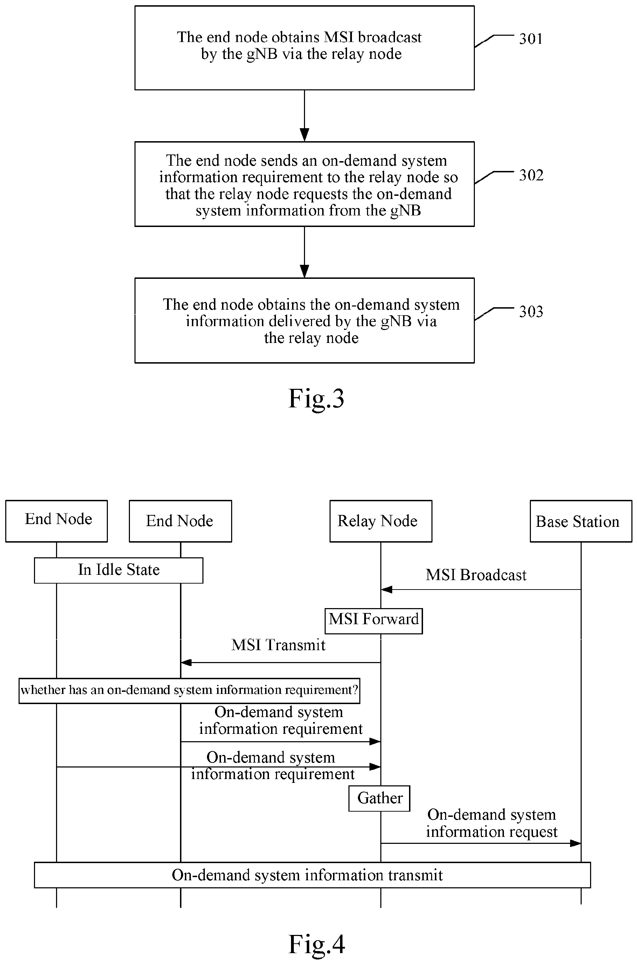

Fig. 3 is a flowchart of a third embodiment of a method for sending system information according to the present disclosure. As shown in Fig. 3, the following specific implementations are included.

In 301, the end node obtains MSI broadcast by the gNB via the relay node.

In the relay scenario, after the MSI broadcast by the gNB is received by the relay node, the relay node forwards the MSI, that is, forwards the MSI to the end node served by the relay node.

In 302, the end node sends an on-demand system information requirement to the relay node so that the relay node requests the on-demand system information from the gNB.

When the end node is in a non-connected state and has an on-demand system information requirement, the on-demand system information requirement may be sent to the relay node. The non-connected state may include an idle state and an inactive state, and the like.

For an end node in a non-connected state, after obtaining the information forwarded by the relay node, it may determine whether it needs to request other required system information according to the system information that the current cell has broadcast, that is, whether it has an on-demand system information requirement.

If there is an on-demand system information requirement, the end node may send the on-demand system information requirement to the relay node by interacting with the relay node, so that the relay node knows the on-demand system information requirement of the end node.

The relay node may gather the obtained on-demand system information requirements of individual end nodes, and collectively request from the gNB according to the gathering result.

In 303, the end node obtains the on-demand system information delivered by the gNB via the relay node.

The manner in which the end node obtains the on-demand system information delivered by the gNB via the relay node may include:
1) the end node obtaining the on-demand system information sent by the relay node through the connection between the relay node and the end node, where the on-demand system information was sent to the relay node by the gNB through an RRC connection between the gNB and the relay node; and
2) the end node obtaining the on-demand system information broadcast by the gNB, and the relay node transmitting the on-demand system information broadcast by the gNB to the end node through transparent transmission of the relay node by means of RRC dedicated signaling.

In addition, for an end node in a connected state, the updated system information delivered by the gNB may also be obtained via the relay node.

The specific implementations may include:
1) the end node obtaining system information delivered by the gNB through an RRC connection between the end node and the gNB, and the relay node transmitting the system information through transparent transmission;
2) the end node obtaining system information sent by the relay node through the connection between the relay node and the end node, where the system information was sent to the relay node by the gNB through the RRC connection between the gNB and the relay node; and
3) the end node obtaining a paging message delivered by the gNB through relay of the relay node, obtaining the system information broadcast by the gNB through relay of the relay node, and reading a corresponding system information block from the system information according to the paging message.

For the implementation 3), an enhance paging mechanism is needed for relaying the paging message of the gNB to the end node and relaying the system information to the end node, which requires that the paging occasion of the end node and the configuration of the discontinuous reception (DRX) cycle are not affected by the relay and the delay introduced by the relay.

Based on the above description, Fig. 4 is a schematic diagram of interaction among the end node, the relay node, and the gNB according to the present disclosure.

As shown in Fig. 4, it is assumed that the relay node serves two end nodes in total, and each of the two end nodes are in an idle state.

The relay node receives MSI broadcast by the gNB, performs transparent forwarding, and transmits the MSI to the end nodes through a connection between the relay node and the end nodes.

The end node determines whether it has an on-demand system information requirement, and if so, sends the on-demand system information requirement to the relay node.

The relay node gathers the obtained on-demand system information requirements of individual end nodes, and sends the on-demand system information request to the gNB according to the gathering result.

The gNB delivers the requested on-demand system information to the end node via the relay node.

In the above embodiments, each of the descriptions of the various embodiments has its own emphasis, and the parts that are not detailed in a certain embodiment may be referred to the related descriptions in other embodiments.

In summary, with the solution in the above method embodiments, the relay node may obtain MSI broadcast by the base station, forward the MSI to the end node served by the relay node, obtain an on-demand system information requirement of the end node, request the on-demand system information required by the end node from the base station, and then send the on-demand system information delivered by the base station to the corresponding end node. In addition, the relay node may also send updated system information delivered by the base station to the end node, thereby solving the problem of sending system information in a relay scenario.

The above is description of method embodiments, and the solution of the present disclosure will be further described below with reference to apparatus embodiments.

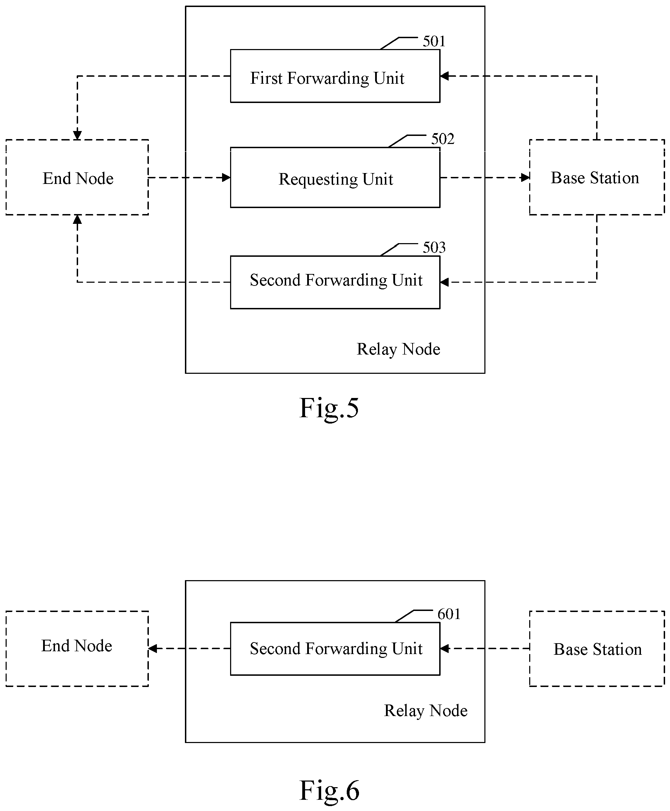

Fig. 5 is a structural schematic diagram of a first embodiment of a relay node according to the present disclosure. As shown in Fig. 5, the relay node includes a first forwarding unit 501, a requesting unit 502, and a second forwarding unit 503.

The first forwarding unit 501 is configured to obtain MSI broadcast by a base station, and forward the MSI to an end node served by the relay node.

The requesting unit 502 is configured to obtain an on-demand system information requirement of the end node, and request the on-demand system information from the base station.

The second forwarding unit 503 is configured to send the on-demand system information delivered by the base station to the corresponding end node.

The requesting unit 502 may obtain the on-demand system information requirement from an end node in a non-connected state.

In addition, the requesting unit 502 may request the on-demand system information from the base station through random access, or request the on-demand system information from the base station through random access RRC dedicated signaling.

The second forwarding unit 503 may obtain the on-demand system information sent by the base station through an RRC connection between the base station and the relay node, and send the on-demand system information to the corresponding end node through a connection between the relay node and the end node.

Alternatively, the second forwarding unit 503 may transmit the on-demand system information broadcast by the base station to the corresponding end node through transparent transmission of the relay node by means of RRC dedicated signaling.

Fig. 6 is a structural schematic diagram of a second embodiment of a relay node according to the present disclosure. As shown in Fig. 6, the relay node includes a third forwarding unit 601.

The third forwarding unit 601 is configured to send updated system information obtained from the base station to the end node in a connected state.

Specifically, the third forwarding unit 601 may transmit the system information that is sent by the base station to the end node through an RRC connection between the base station and the end node to the end node through transparent transmission.

Alternatively, the third forwarding unit 601 may obtain system information sent by the base station through an RRC connection between the base station and the relay node, and send the system information to the end node through a connection between the relay node and the end node.

Alternatively, the third forwarding unit 601 may relay a paging message delivered by the base station to the end node, and relay system information broadcast by the base station to the end node, so that the end node reads a corresponding system information block from the system information according to the paging message.

In practical application, the components shown in Figs. 5 and 6 may be both included in the relay node at the same time.

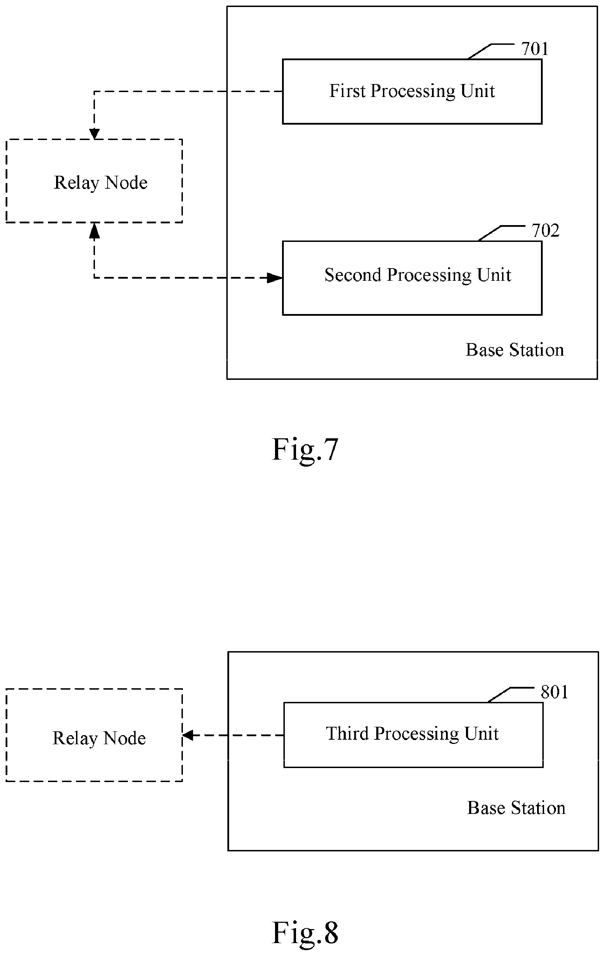

Fig. 7 is a structural schematic diagram of a first embodiment of a base station according to the present disclosure. As shown in Fig. 7, the base station includes a first processing unit 701 and a second processing unit 702.

The first processing unit 701 is configured to broadcast MSI to a relay node, so that the relay node forwards the MSI to an end node served by the relay node.

The second processing unit 702 is configured to obtain an on-demand system information request from the relay node, the on-demand system information request carrying an on-demand system information requirement obtained by the relay node from the end node; and deliver the on-demand system information to the corresponding end node via the relay node.

Specifically, the second processing unit 702 may obtain an on-demand system information request sent by the relay node through random access, or obtain an on-demand system information request sent by the relay node through RRC dedicated signaling.

In addition, the second processing unit 702 may send the on-demand system information to the relay node through an RRC connection with the relay node, so that the relay node sends the on-demand system information to the corresponding end node through a connection between the relay node and the end node.

Alternatively, the second processing unit 702 may broadcast the on-demand system information, so that the relay node transmits the on-demand system information to the corresponding end node through transparent transmission by means of RRC dedicated signaling.

The second processing unit 702 may determine the delivery manner of the on-demand system information according to a predetermined criterion.

Fig. 8 is a structural schematic diagram of a second embodiment of a base station according to the present disclosure. As shown in Fig. 8, the base station includes a third processing unit 801.

The third processing unit 801 is configured to send updated system information to an end node in a connected state via a relay node.

Specifically, the third processing unit 801 may send system information to the end node through an RRC connection with the end node, where the relay node transmits the system information through transparent transmission.

Alternatively, the third processing unit 801 may send system information to the relay node through an RRC connection with the relay node, so that the relay node sends the system information to the end node through a connection between the relay node and the end node.

Alternatively, the third processing unit 801 may relay a paging message to the end node via the relay node, and relays the broadcast system information to the end node via the relay node, so that the end node reads a corresponding system information block from the system information according to the paging message.

In practical application, the components shown in Figs. 7 and 8 may be both included in the base station at the same time.

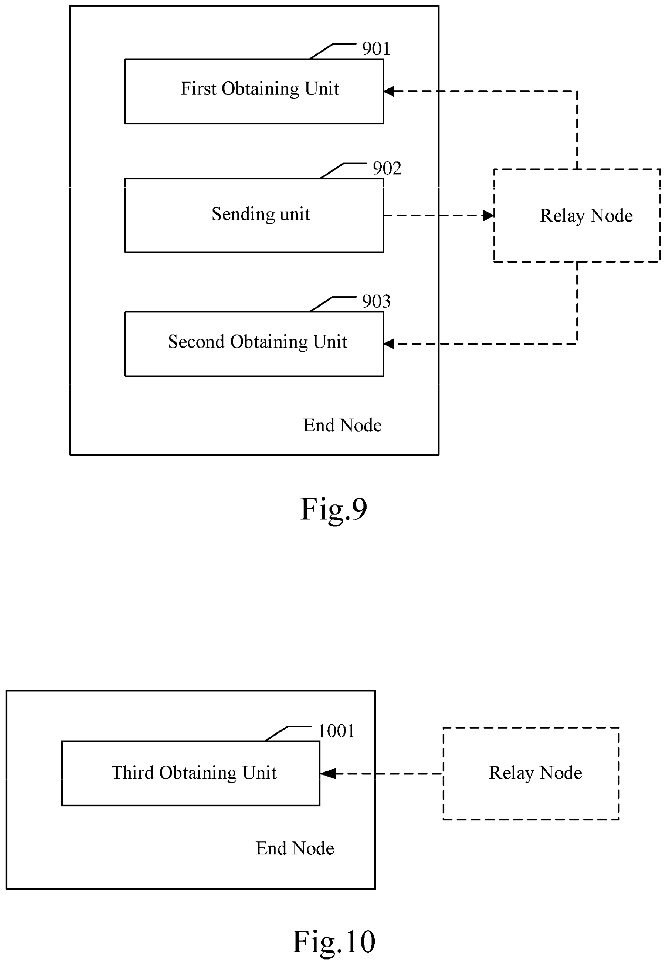

Fig. 9 is a structural schematic diagram of a first embodiment of an end node according to the present disclosure. As shown in Fig. 9, the end node includes a first obtaining unit 901, a sending unit 902, and a second obtaining unit 903.

The first obtaining unit 901 is configured to obtain MSI broadcast by a base station via a relay node.

The sending unit 902 is configured to send an on-demand system information requirement to the relay node, so that the relay node requests on-demand system information from the base station.

The second obtaining unit 903 is configured to obtain the on-demand system information delivered by the base station via the relay node.

When the end node is in a non-connected state and has an on-demand system information requirement, the sending unit 902 sends the on-demand system information requirement to the relay node.

The second obtaining unit 903 may obtain the on-demand system information sent by the relay node through a connection between the relay node and the end node, where the on-demand system information was sent to the relay node by the base station through an RRC connection between the base station and the relay node.

Alternatively, the second obtaining unit 903 may obtain the on-demand system information broadcast by the base station, and the relay node transmits the on-demand system information broadcast by the base station to the end node through transparent transmission of the relay node by means of RRC dedicated signaling.

Fig. 10 is a structural schematic diagram of a second embodiment of an end node according to the present disclosure. As shown in Fig. 10, the end node includes a third obtaining unit 1001.

The third obtaining unit 1001 is configured to obtain updated system information delivered by a base station via a relay node when the end node is in a connected state.

Specifically, the third obtaining unit 1001 may obtain system information delivered by the base station through an RRC connection with the base station, where the relay node transmits the system information through transparent transmission.

Alternatively, the third obtaining unit 1001 may obtain system information sent by the relay node through a connection between the relay node and the end node, where the system information was sent to the relay node by the base station through an RRC connection between the base station and the relay node.

Alternatively, the third obtaining unit 1001 may obtain a paging message delivered by the base station through relay of the relay node, obtain the system information broadcast by the base station through relay of the relay node, and read a corresponding system information block from the system information according to the paging message.

In practical application, the components shown in Figs. 9 and 10 may be both included in the end node at the same time.

For the specific operation process of the above apparatus embodiments, reference may be made to the corresponding description in the above method embodiments, details of which will not be repeated herein.

According to the solution described in the above apparatus embodiments, the relay node may obtain MSI broadcast by the base station, forward the MSI to the end node served by the relay node, obtain an on-demand system information requirement of the end node, request the on-demand system information required by the end node from the base station, and then send the on-demand system information delivered by the base station to the corresponding end node. In addition, the relay node may also send updated system information delivered by the base station to the end node, thereby solving the problem of sending system information in a relay scenario.

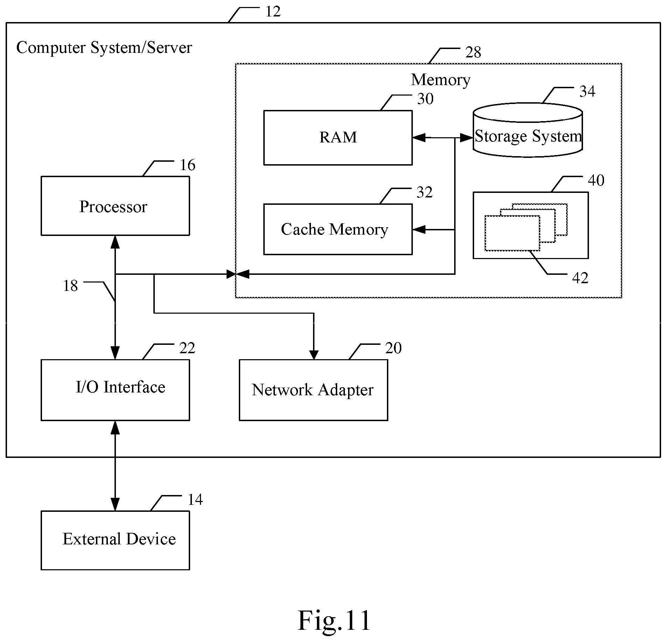

Fig. 11 shows a block diagram of an exemplary computer system/server 12 suitable for use in implementing the embodiments of the present disclosure. The computer system/server 12 shown in Fig. 11 is merely an example and should not impose any limitation on the function and the use range of the embodiments of the present disclosure.

As shown in Fig. 11, the computer system/server 12 is embodied in the form of a general purpose computing device. The components of computer system/server 12 may include, but are not limited to, one or more processors (processing units) 16, a memory 28, and a bus 18 that connects different system components, including the memory 28 and the processor 16.

The bus 18 represents one or more of several types of bus structures, including a memory bus or a memory controller, a peripheral bus, a graphics acceleration port, a processor, or a local bus using any of a variety of bus structures. For example, these architectures include, but are not limited to, an Industry Standard Architecture (ISA) bus, a Micro Channel Architecture (MAC) bus, an Enhanced ISA Bus, a Video Electronics Standards Association (VESA) local bus, and a peripheral component interconnects (PCI) bus.

The computer system/server 12 typically includes a variety of computer system readable media. These media may be any available media that can be accessed by the computer system/server 12, including both volatile and non-volatile media, removable and non-removable media.

The memory 28 may include a computer system readable medium in the form of a volatile memory, such as a random access memory (RAM) 30 and/or a cache memory 32. The computer system/server 12 may further include other removable/non-removable, volatile/non-volatile computer system storage media. By way of example only, the storage system 34 may be used to read and write non-removable, non-volatile magnetic media (not shown in Fig. 11, commonly referred to as "hard disk drives"). Although not shown in Fig. 11, a magnetic disk drive for reading and writing a removable non-volatile magnetic disk (for example, a "floppy disk"), and an optical disk drive for reading and writing a removable non-volatile optical disk (for example, a CD-ROM, a DVD-ROM or other optical media) may be provided. In these cases, each drive may be connected to the bus 18 via one or more data medium interfaces. The memory 28 may include at least one program product having a set (e.g., at least one) of program modules configured to perform the functions of various embodiments of the present disclosure.

A program/utility 40 having one set (at least one) of program modules 42 may be stored, for example, in the memory 28, such program modules 42 including, but not limited to, an operating system, one or more applications, other programs modules and program data, and each or some combination of these examples may include an implementation of a network environment. The program module 42 typically performs the functions and/or methods of the described embodiments of the present disclosure.

The computer system/server 12 may also be in communication with one or more external devices 14 (e.g., a keyboard, a pointing device, a display 24, etc.), and may also be in communication with one or more devices that enable a user to interact with the computer system/server 12, and/or in communication with any device (e.g., a network card, a modem, etc.) that enables the computer system/server 12 to communicate with one or more other computing devices. Such communication may be performed via an input/output (I/O) interface 22. Also, the computer system/server 12 may also communicate with one or more networks (e.g., a local area network (LAN), a wide area network (WAN), and/or a public network, such as the Internet) through a network adapter 20. As shown in Fig. 11, the network adapter 20 communicates with other modules of the computer system/server 12 via the bus 18. It should be understood that although not shown in the figures, other hardware and/or software modules may be utilized in conjunction with computer system/server 12, including but not limited to: microcode, device drivers, redundant processing units, external disk drive arrays, RAID systems, tape drives, data backup storage systems, and the like.

The processor 16 executes various functional applications and data processing by running programs stored in the memory 28, such as implementing the methods of the embodiments shown in Fig. 1, Fig. 2 or Fig. 3.

The present disclosure also discloses a computer readable storage medium having stored thereon a computer program that, when executed by a processor, implements the methods of the embodiments shown in Fig. 1, Fig. 2 or Fig. 3.

Any combination of one or more computer readable media can be utilized. The computer readable medium may be a computer readable signal medium or a computer readable storage medium. The computer readable storage medium may be, for example, but not limited to, an electronic, magnetic, optical, electromagnetic, infrared, or semiconductor system, apparatus, or device, or any combination of the above. More specific examples (non-exhaustive lists) of the computer readable storage media include: electrical connections having one or more wires, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above. In this document, a computer readable storage medium may be any tangible medium that may contain or store a program, which may be used by or in connection with an instruction execution system, apparatus or device.

A computer readable signal medium may include a data signal that is propagated in the baseband or as part of a carrier, carrying computer readable program codes. Such propagated data signals may take a variety of forms including, but not limited to, electromagnetic signals, optical signals, or any suitable combination of the above. The computer readable signal medium may also be any computer readable medium other than a computer readable storage medium, which may send, propagate, or transmit a program for use by or in connection with the instruction execution system, apparatus, or device.

The program codes contained in the computer readable medium may be transmitted by any suitable medium, including but not limited to wireless, wire, fiber optic cable, RF, etc., or any suitable combination of the above.

The computer program codes for performing the operations of the present disclosure may be written in one or more programming languages, or a combination thereof, including an object oriented programming language such as Java, Smalltalk, C++, and conventional procedural programming languages such as the "C" language or a similar programming language. The program codes may be executed entirely on the user's computer, partly executed on the user's computer, executed as a stand-alone software package, partly executed on the user's computer and partly executed on a remote computer, or entirely executed on the remote computer or server. In the case of a remote computer, the remote computer may be connected to the user's computer through any kind of network, including a local area network (LAN) or a wide area network (WAN), or may be connected to an external computer (e.g., using an Internet service provider to connect via the Internet).

In the several embodiments provided by the present disclosure, it should be understood that the disclosed apparatus, method and the like may be implemented in other manners. For example, the apparatus embodiments described above are merely illustrative. For example, the division of the units is only a logical function division, and other division manner may be used during the actual implementation.

The units described as separate components may or may not be physically separated, and the components displayed as units may or may not be physical units, that is, may be located in one place, or may be distributed to multiple network units. Some or all of the units may be selected according to actual needs to achieve the purpose of the solution of the embodiments.

In addition, each functional unit in each embodiment of the present disclosure may be integrated into one processing unit, or each unit may exist physically separately, or two or more units may be integrated into one unit. The above integrated unit may be implemented in the form of hardware or in the form of hardware plus software functional units.

The above-described integrated units implemented in the form of software functional units may be stored in a computer readable storage medium. The above software functional units are stored in one storage medium and include instructions for causing a computer device (which may be a personal computer, a server, or a network device, etc.) or a processor to perform some of the steps of the methods described in various embodiments of the present disclosure. The above storage medium includes various media that can store program codes, such as a USB disk, a mobile hard disk, a ROM, a RAM, a magnetic disk, or an optical disk.

The above are only the preferred embodiments of the present disclosure, and are not intended to limit the present disclosure. Any modifications, equivalents, improvements, etc., which are made within the spirit and principles of the present disclosure, should be included within the scope of protection of the present disclosure.

## Claims

1. A method for sending system information, comprising:
obtaining minimized system information (MSI) broadcast by a base station, and forwarding the MSI to a served end node, by a relay node;
obtaining an on-demand system information requirement of the end node, and requesting on-demand system information from the base station, by the relay node; and
sending, by the relay node, the on-demand system information delivered by the base station to the corresponding end node.

2. The method according to claim 1, wherein obtaining, by the relay node, the on-demand system information requirement of the end node comprises:
obtaining, by the relay node, an on-demand system information requirement of the end node in a non-connected state.

3. The method according to claim 1, wherein requesting, by the relay node, the on-demand system information from the base station comprises:
requesting, by the relay node, on-demand system information from the base station through random access; or,
requesting, by the relay node, on-demand system information from the base station through radio resource control (RRC) dedicated signaling.

4. The method according to claim 1, wherein sending, by the relay node, the on-demand system information delivered by the base station to the corresponding end node comprises:
obtaining, by the relay node, the on-demand system information sent by the base station through a radio resource control (RRC) connection between the base station and the relay node, and sending, by the relay node, the on-demand system information to the corresponding end node through a connection between the relay node and the end node; or,
sending, by the relay node, the on-demand system information broadcast by the base station to the corresponding end node through a transparent transmission of the relay node by means of RRC dedicated signaling.

5. A method for sending system information, comprising:
sending, by a relay node, updated system information obtained from a base station to an end node in a connected state.

6. The method according to claim 5, wherein sending, by the relay node, the updated system information obtained from the base station to the end node in the connected state comprises:
sending, by the relay node, to the end node through transparent transmission, the system information sent by the base station to the end node through a radio resource control (RRC) connection between the base station and the end node; or,
obtaining the system information sent by the base station through an RRC connection between the base station and the relay node, and sending the system information to the end node through a connection between the relay node and the end node, by the relay node; or,
relaying a paging message delivered by the base station to the end node, and relaying the system information broadcast by the base station to the end node, by the relay node, so that the end node reads a corresponding system information block from the system information according to the paging message.

7. A method for sending system information, comprising:
broadcasting, by a base station, minimized system information (MSI) to a relay node, so that the relay node forwards the MSI to an end node served by the relay node;
obtaining, by the base station, an on-demand system information request from the relay node, wherein the on-demand system information request carries an on-demand system information requirement obtained by the relay node from the end node; and
delivering, by the base station, on-demand system information to the corresponding end node via the relay node.

8. The method according to claim 7, wherein obtaining, by the base station, the on-demand system information request from the relay node comprises:
obtaining, by the base station, the on-demand system information request sent by the relay node through random access; or,
obtaining, by the base station, the on-demand system information request sent by the relay node through radio resource control (RRC) dedicated signaling.

9. The method according to claim 7, wherein delivering, by the base station, the on-demand system information to the corresponding end node via the relay node comprises:
sending, by the base station, the on-demand system information to the relay node through a radio resource control (RRC) connection between the base station and the relay node, so that the relay node sends the on-demand system information to the corresponding end node through a connection between the relay node and the end node; or,
broadcasting, by the base station, the on-demand system information, so that the relay node sends the on-demand system information to the corresponding end node through transparent transmission by means of RRC dedicated signaling.

10. The method according to claim 9, wherein
a delivery manner of the on-demand system information is determined by the base station according to a predetermined criterion.

11. A method for sending system information, comprising:
sending, by a base station, updated system information to an end node in a connected state via a relay node.

12. The method according to claim 11, wherein sending, by the base station, the updated system information to the end node in the connected state via the relay node comprises:
sending, by the base station, the system information to the end node through a radio resource control (RRC) connection between the base station and the end node, wherein the relay node transmits the system information through transparent transmission; or,
sending, by the base station, the system information to the relay node through an RRC connection between the base station and the relay node, so that the relay node sends the system information to the end node through a connection between the relay node and the end node; or,
relaying, by the base station, a paging message to the end node via the relay node, and relaying, by the base station, the broadcast system information to the end node via the relay node, so that the end node reads a corresponding system information block from the system information according to the paging message.

13. A method for sending system information, comprising:
obtaining, by an end node, minimized system information (MSI) broadcast by a base station via a relay node;
sending, by the end node, an on-demand system information requirement to the relay node, so that the relay node requests on-demand system information from the base station; and
obtaining, by the end node, the on-demand system information delivered by the base station via the relay node.

14. The method according to claim 13, wherein sending, by the end node, the on-demand system information requirement to the relay node comprises:
when the end node is in a non-connected state and has an on-demand system information requirement, sending, by the end node, the on-demand system information requirement to the relay node.

15. The method according to claim 13, wherein obtaining, by the end node, the on-demand system information delivered by the base station via the relay node comprises:
obtaining, by the end node, the on-demand system information sent by the relay node through a connection between the relay node and the end node, wherein the on-demand system information was sent by the base station to the relay node through a radio resource control (RRC) connection between the base station and the relay node; or,
obtaining, by the end node, the on-demand system information broadcast by the base station, wherein the relay node sends the on-demand system information broadcast by the base station to the end node through transparent transmission of the relay node by means of RRC dedicated signaling.

16. A method for sending system information, comprising:
obtaining, by an end node in a connected state, updated system information delivered by the base station via a relay node.

17. The method according to claim 16, wherein obtaining, by the end node in the connected state, the updated system information delivered by the base station via the relay node comprises:
obtaining, by the end node, the system information delivered by the base station through a radio resource control (RRC) connection between the end node and the base station, wherein the relay node transmits the system information through transparent transmission; or,
obtaining, by the end node, the system information sent by the relay node through a connection between the relay node and the end node, wherein the system information was sent to the relay node by the base station through an RRC connection between the base station and the relay node; or,
obtaining, by the end node, a paging message delivered by the base station through relay of the relay node, obtaining, by the end node, the system information broadcast by the base station through relay of the relay node, and reading, by the end node, a corresponding system information block from the system information according to the paging message.

18. A relay node, comprising: a first forwarding unit, a requesting unit, and a second forwarding unit; wherein
the first forwarding unit is configured to obtain minimized system information (MSI) broadcast by a base station, and forward the MSI to a served end node;
the requesting unit is configured to obtain an on-demand system information requirement of the end node, and request on-demand system information from the base station; and
the second forwarding unit is configured to send the on-demand system information delivered by the base station to the corresponding end node.

19. The relay node according to claim 18, wherein
the requesting unit is configured to obtain an on-demand system information requirement of the end node in a non-connected state.

20. The relay node according to claim 18, wherein
the requesting unit is configured to request the on-demand system information from the base station through random access; or,
the requesting unit is configured to request the on-demand system information from the base station through radio resource control (RRC) dedicated signaling.

21. The relay node according to claim 18, wherein
the second forwarding unit is configured to obtain the on-demand system information sent by the base station through a radio resource control (RRC) connection between the base station and the relay node, and send the on-demand system information to the corresponding end node through a connection between the relay node and the end node; or,
the second forwarding unit is configured to transmit the on-demand system information broadcast by the base station to the corresponding end node through transparent transmission of the relay node by means of RRC dedicated signaling.

22. A relay node, comprising: a third forwarding unit;
wherein the third forwarding unit is configured to send updated system information obtained from a base station to an end node in a connected state.

23. The relay node according to claim 22, wherein
the third forwarding unit is configured to send to the end node through transparent transmission, the system information sent by the base station to the end node through a radio resource control (RRC) connection between the base station and the end node; or,
the third forwarding unit is configured to obtain the system information sent by the base station through an RRC connection between the base station and the relay node, and send the system information to the end node through a connection between the relay node and the end node; or,
the third forwarding unit is configured to relay a paging message delivered by the base station to the end node, and relay the system information broadcast by the base station to the end node, so that the end node reads a corresponding system information block from the system information according to the paging message.

24. A base station, comprising: a first processing unit and a second processing unit; wherein
the first processing unit is configured to broadcast minimized system information (MSI) to a relay node, so that the relay node forwards the MSI to an end node served by the relay node; and
the second processing unit is configured to obtain an on-demand system information request from the relay node, wherein the on-demand system information request carries an on-demand system information requirement obtained by the relay node from the end node; and deliver on-demand system information to the corresponding end node via the relay node.

25. The base station according to claim 24, wherein
the second processing unit is configured to obtain the on-demand system information request sent by the relay node through random access; or,
the second processing unit is configured to obtain the on-demand system information request sent by the relay node through radio resource control (RRC) dedicated signaling.

26. The base station according to claim 24, wherein
the second processing unit is configured to send the on-demand system information to the relay node through a radio resource control (RRC) connection between the base station and the relay node, so that the relay node sends the on-demand system information to the corresponding end node through a connection between the relay node and the end node; or,
the second processing unit is configured to broadcast the on-demand system information, so that the relay node sends the on-demand system information to the corresponding end node through transparent transmission by means of RRC dedicated signaling.

27. The base station according to claim 26, wherein
the second processing unit is configured to determine a delivery manner of the on-demand system information according to a predetermined criterion.

28. Abase station, comprising: a third processing unit;
wherein the third processing unit is configured to send updated system information to an end node in a connected state via a relay node.

29. The base station according to claim 28, wherein
the third processing unit is configured to send the system information to the end node through a radio resource control (RRC) connection between the base station and the end node, wherein the relay node sends the system information through transparent transmission; or,
the third processing unit is configured to send the system information to the relay node through an RRC connection between the base station and the relay node, so that the relay node sends the system information to the end node through a connection between the relay node and the end node; or,
the third processing unit is configured to relay a paging message to the end node via the relay node, and relay the broadcast system information to the end node via the relay node, so that the end node reads a corresponding system information block from the system information according to the paging message.

30. An end node, comprising: a first obtaining unit, a sending unit, and a second obtaining unit; wherein
the first obtaining unit is configured to obtain minimized system information (MSI) broadcast by a base station via a relay node;
the sending unit is configured to send an on-demand system information requirement to the relay node, so that the relay node requests on-demand system information from the base station; and
the second obtaining unit is configured to obtain the on-demand system information delivered by the base station via the relay node.

31. The end node according to claim 30, wherein
when the end node is in a non-connected state and has an on-demand system information requirement, the sending unit is configured to send the on-demand system information requirement to the relay node.

32. The end node according to claim 30, wherein
the second obtaining unit is configured to obtain the on-demand system information sent by the relay node through a connection between the relay node and the end node, wherein the on-demand system information was sent by the base station to the relay node through a radio resource control (RRC) connection between the base station and the relay node; or,
the second obtaining unit is configured to obtain the on-demand system information broadcast by the base station, wherein the relay node transmits the on-demand system information broadcast by the base station to the end node through transparent transmission of the relay node by means of RRC dedicated signaling.

33. An end node, comprising: a third obtaining unit;
wherein the third obtaining unit is configured to, when the end node is in a connected state, obtain updated system information delivered by the base station via a relay node.

34. The end node according to claim 33, wherein
the third obtaining unit is configured to obtain the system information delivered by the base station through a radio resource control (RRC) connection with the base station, wherein the relay node transmits the system information through transparent transmission; or,
the third obtaining unit is configured to obtain the system information sent by the relay node through a connection between the relay node and the end node, wherein the system information was sent to the relay node by the base station through an RRC connection between the base station and the relay node; or,
the third obtaining unit is configured to obtain a paging message delivered by the base station through relay of the relay node, obtain the system information broadcast by the base station through relay of the relay node, and read a corresponding system information block from the system information according to the paging message.
